# EUROPÄISCHE PATENTSCHRIFT

(11) **EP 0 970 623 B1**
(45) Veröffentlichungstag und Bekanntmachung des Hinweises auf die Patenterteilung: **28.09.2005**
(21) Anmeldenummer: 99112508.9
(22) Anmeldetag: 01.07.1999
(51) Int. Cl.: A23P 1/04, A23L 1/30, B01J 13/06, A61K 9/50

(54) **Mikroverkapselte ungesättigte Fettsäure oder Fettsäureverbindung mit zwei Polymerschichten**
Micro-encapsulated unsaturated fatty acids or derivatives with two polymer layers
Acides gras insaturés et dérivés encapsulés par deux couches de polymères

(30) Priorität: 08.07.1998 DE 19830375
(43) Veröffentlichungstag der Anmeldung: 12.01.2000
(73) Patentinhaber: K.D. Pharma Bexbach GmbH, 66450 Bexbach (DE)
(72) Erfinder: Krumbholz, Rudolf Dr., 57510 Holving (FR); Lamprecht, Alf, 66121 Saarbrücken (DE); Lehr, Claus-Michael Prof. Dr., 66125 Saarbrücken (DE); Schäfer, Ulrich Dr., 66280 Sulzbach (DE); Schirra, Norbert, 66333 Völklingen (DE); Treitz, Manfred Dr., 66352 Grossrosseln (DE)
(74) Vertreter: Bernhardt, Winfrid

(56) Entgegenhaltungen:
- EP-A- 0 336 662
- EP-A- 0 338 499
- EP-A- 0 627 173
- WO-A-92/21251
- WO-A-97/00623
- WO-A-98/18346
- DE-A- 2 037 947
- FR-A- 2 758 055
- GB-A- 1 236 885
- US-A- 3 041 288
- US-A- 5 853 761

## Beschreibung

Die Erfindung betrifft ein Verfahren zum Herstellen einer mikroverkapselten ungesättigten Fettsäure oder Fettsäureverbindung, insbesondere einer Omega-3-Fettsäure oder Omega-6-Fettsäure oder eines Ethylesters oder Glycerids derselben, oder einer mikroverkapselten Mischung aus, insbesondere vorstehenden, Fettsäuren und/oder Fettsäureverbindungen, bei dem eine zweischichtige Kapselwand erzeugt wird.

Derartige mikroverkapselte Fettsäureerzeugnisse sind zur Nahrungsergänzung als Zusatz zu Lebensmitteln erwünscht. Die Verkapselung schützt dabei das Fettsäureerzeugnis vor Oxidation und verhindert Geruchsbildung.
Bekannt ist z.B. aus der US-PS 3,041,288 eine Verkapselung mit Knochengelatine und aus der EP 0 336 662 A eine Verkapselung mit einem anderen Polymer.

In dem letzteren Dokument ist als unbefriedigendes Gegenbeispiel auch eine zweischichtige Verkapselung mit einer Innenschicht aus einem Alginat und einer Außenschicht aus Zelluloseazetat angegeben. Die Innenschicht wurde erzeugt, indem eine Emulsion von Alginat und Öl einer Kalzium enthaltenden Lösung zugegeben wurde, durch die das Alginat ausgefällt wurde. Die so erhaltenen Kapseln wurden erneut suspendiert in einer basischen Lösung von Zelluloseazetatphthalat, das dann auf den Mikrokapseln ausgefällt wurde durch Zugeben in eine saure Lösung.

Die GB 1 236 885 A hat mehrschichtige Verkapselungen anderer Substanzen einschließlich Ölen zum Inhalt. Die weiteren Schichten werden ebenfalls nach erneuter Suspendierung der vorher geschaffenen Kapseln erzeugt, und zwar hier durch Suspendierung in einer Lösung eines primären weiteren Schichtmaterials und Eintropfen der Suspension in einen Härter. Verschiedene Kombinationen von primärem Schichtmaterial und Härter sind angegeben. darunter Natriumalginat/Katziumjonen und Chitosanoxalat/Alkall. Als Material der innersten Kapselschicht ist ein Komplex-Koazervat von Gelatine und Gummi arabicum genannt.

Die bekannten Verkapselungen lassen insbesondere hinsichtlich ihrer Lagerstabilität und Temperaturstabilität zu wünschen übrig.
Der Erfindung liegt die Aufgabe zugrunde, ein stabileres Erzeugnis der eingangs genannten Art in einer vorteilhaften Verfahrensweise zu schaffen.

Gemäß der Erfindung wird dieser Zweck in der Welse erfüllt, dass die Fettsäure oder Fettsäureverbindung oder Mischung in Wasser dispergiert wird und zwei jeweils durch ein Polymer gebildete Schichten aus kolloidaler Lösung des Polymers in dem Wasser nacheinander auf den Partikeln der Dispersion abgelagert werden, wobei nach der Ablagerung der inneren Schicht eine kolloidale Lösung des die äußere Schicht bildenden Polymers zugegeben wird und das Polymer zur Ablagerung auf der inneren Schicht gebracht wird.

Die innere Schicht kann durch Knochengelatine (Gelatine A oder Gelatine B), Casein oder ein Alginat oder durch ein Derivat oder Satz eines dieser Polymere gebildet sein und die äußere Schicht durch Gelatine B, Gummi arabicum, Pektin oder Chitosan oder durch ein Derivat oder Satz eines' dieser Polymere.

Insbesondere werden die Kombinationen Gelatine A/Gummi arabicum, Gelatine B/Gummi arabicum, Casein/Gummi arabicum, Gelatine A/Pektin, Gelatine A/Gelatine B und Alkalimetall-Alginat/Chitosan vorgeschlagen sowie Derivate und Satze dieser Polymere.

Vorzugsweise wird die innere Schicht durch Grenzflächenktöfte und die äußere Schicht durch elektrostatische Kräfte zur Anlagerung an den Partikeln gebracht.

Das die innere Schicht bildende Polymer ist vorzugsweise so gewählt, dass es als ein Schutzkolloid wirkt, das die Dispersion im weiteren Herstellungsgang stabilisiert. Zweckmäßigerweise wird dann die Fettsäure oder Fettsäureverbindung oder Mischung in einer vorher vorbereiteten kolloidalen Lösung des die innere Schicht bildenden Polymers emulgiert.

Für die Ablagerung der äußeren Schicht wird als besonders vorteilhafte Ausgestaltung des Verfahrens vorgeschlagen, dass durch Änderung des pH-Wertes der Dispersion die Ladung des die innere Schicht bildenden Polymers und/oder die Ladung des die äußere Schicht bildenden Polymers eine Differenz zwischen den Ladungen der beiden Polymere erzeugend geändert wird.
In der Regel wird der pH-Wert zur Erzeugung einer positiven Ladung des die innere Schicht bildenden Polymers abgesenkt werden, vorzugsweise auf 3,5 bis 5,5.

Mit anschließender Temperatursenkung lösst sich die Ausbildung der beiden Schichten durch Gelbildung unterstützen.
Danach kann den beiden Gelschichten durch Trocknung Wasser entzogen und damit eine weitere Verfestigung herbeigeführt werden.

Zweckmäßigerweise wird man die Partikel sich vor der Trocknung absetzen lassen und den Überstand abgießen.

Nach einer vorteilhaften Ausgestaltung des Verfahrens wird die Trocknung durch Suspendieren der Partikel in einer Wasser anziehenden Flüssigkeit, vorzugsweise Ethanol, vorgenommen.
Ethanol entfernt außerdem, da es viele ungesättigte Fettsäuren löst, alle möglicherweise nicht verkapselten Mengen. Damit wird im Falle von Fischölen der unangenehme Fischgeruch beseitigt, der sonst durch auf der Oberfläche der Mikrokapseln verbleibende Reste entsteht.

Nach der Trocknung können die Partikel filtriert und im wesentlichen vollständig getrocknet werden.
Man erhält so ein fließfähiges Erzeugnis.

Das Erzeugnis ist in siedendem Wasser stabil. Damit eröffnen sich neue Verwendungsgebiete. Der Einsatz wird zur Nahrungsergänzung auch in Lebensmitteln möglich, die höheren Temperaturen ausgesetzt werden, wie Fertigmehle für Backwaren, fertige Backmischungen oder gefriergetrocknete Fertigsuppen.
Ein Einsatz in Joghurt, Speiseeis, Müsli, Getränken u.a. ist gleichfalls möglich.

Die größere Stabilität der Kapseln macht sie insbesondere für mehrfach ungesättigte Fettsäuren geeignet, die besonders oxidationsgefährdet sind, beispielsweise die Eicosapentaensäure.

Im folgenden sei die Erfindung anhand von Ausführungsbeispielen weiter erläutert.

### Beispiel 1

Ein zu verkapselnder 95%iger Eicosapentaensäureethylester wird in eine 2,5%ige Lösung von Gelatine A (Knochengelatine) in Wasser gegeben und bei 50°C 20 Minuten lang mit einem Hochgeschwindigkeitsrührer oder mit Ultraschall dispergiert.
Es entsteht eine stabile Emulsion von verhältnismäßig großer Homogenität der Partikel. Die Gelatine A wirkt als Schutzkolloid. Sie bildet zugleich eine erste Schicht der Verkapselung. Eine 2,5%ige wässrige Lösung von Gummi arabicum wird zu der Emulsion gegeben. Nach Zugabe von weiterem Wasser und Einstellung der wässrigen Phase auf einen schwach sauren pH-Wert, d.h. von vorher etwa 7 bis 7,5 auf etwa 4,25 bis 4,5, wird unter normalem Rühren auf Raumtemperatur abgekühlt.
Während dieser Behandlung wird eine, zunächst noch lockere und voluminöse, zweite Schicht auf den Partikeln abgelagert.
Eine weitere Kühlung auf etwa 5°C mittels Eisbad schließt sich an.

Die Partikel mit den beiden durch die Kühlung in festere Gelform gebrachten Verkapselungs-Schichten werden sedimentieren gelassen und durch Dekantieren vom Überstand getrennt. Danach werden sie in Ethanol suspendiert und später filtriert und an der Luft getrocknet.
Das Ethanol entzieht den beiden Gelschichten Wasser und verfestigt sie damit so weit, daß die Filtration möglich ist. Bei dem Trocknen an der Luft verfliegen die Reste des Ethanols; die Verkapselungs-Schichten erreichen im lufttrockenen Zustand ihre endgültige Festigkeit. Die Mikrokapseln sind zwischen 30 und 70 µm groß und haben eine glatte Oberfläche. Sie bilden ein fließfähiges Pulver.

Es wird generell unter Inertgas gearbeitet, um eine Oxidation des Eicosapentaensäureehtylesters während der Herstellung des Erzeugnisses zu vermeiden.

### Beispiele 2, 3 und 4

Das in Beispiel 1 angegebene Verfahren wird auf die Polymerkombinationen Gelatine B/Gummi arabicum, Casein/Gummi arabicum und Gelatine A/Pektin angewendet.

Die erhaltenen Mikrokapseln haben etwa gleiche Eigenschaften wie sie nach Beispiel 1 erzielt wurden.

### Beispiel 5

Das in Beispiel 1 angegebene Verfahren wurde auf die Polymerkombination Gelatine A/Gelatine B angewendet mit der Abwandlung, daß der zum Auslösen der zweiten Ablagerung eingestellte pH-Wert 5,5 betrug.
Die erhaltenen Mikrokapseln haben wiederum etwa gleiche Eigenschaften wie sie nach Beispiel 1 erzielt wurden.

## Patentansprüche

1. Verfahren zum Herstellen einer mikroverkapselten ungesättigten Fettsäure oder Fettsäureverbindung, insbesondere einer Omega-3-Fettsäure oder Omega-6-Fettsäure oder eines Ethylesters oder Glycerids derselben, oder einer mikroverkapselten Mischung aus, insbesondere vorstehenden, Fettsäuren und/oder Fettsäureverbindungen, bei dem eine zweischichtige Kapsetwand erzeugt wird,
**dadurch gekennzeichnet,**
**dass** die Fettsäure oder Fettsäureverbindung oder Mischung in Wasser dispergiert wird und zwei jeweils durch ein Polymer gebildete Schichten aus kolloidaler Lösung des Polymers in dem Wasser nacheinander auf den Partikeln der Dispersion abgelagert werden, wobei nach der Ablagerung der inneren Schicht eine kolloidale Lösung des die äußere Schicht bildenden Polymers zugegeben wird und das Polymer zur Ablagerung auf der inneren Schicht gebracht wird.

2. Verfahren nach Anspruch 1,
**dadurch gekennzeichnet,**
**dass** die Fettsäure oder Fettsäureverbindung oder Mischung in einer vorher bereiteten wässrigen kolloidalen Lösung des die innere Schicht bildenden Polymers dispergiert wird.

3. Verfahren nach Anspruch 1 oder 2,
**dadurch gekennzeichnet,**
**dass** das die innere Schicht bildende Polymer als Schutzkolloid wirkt.

4. Verfahren nach einem der Ansprüche 1 bis 3,
**dadurch gekennzeichnet,**
**dass** die innere Schicht durch Grenzflächenkräfte und/oder die äußere Schicht durch elektrostatische Kräfte zur Anlagerung an den Partikeln gebracht wird.

5. Verfahren nach einem der Ansprüche 1 bis 4,
**dadurch gekennzeichnet,**
**dass** das die äußere Schicht bildende Polymer zur Ablagerung gebracht wird, indem durch Änderung des pH-Wertes der Dispersion die Ladung des die innere Schicht bildenden Polymers und/oder die Ladung des die äußere Schicht bildenden Polymers eine Differenz zwischen den Ladungen der beiden Polymere erzeugend geändert wird.

6. Verfahren nach Anspruch 5,
**dadurch gekennzeichnet,**
**dass** der pH-Wert zur Erzeugung einer positiven Ladung des die innere Schicht bildenden Polymers abgesenkt wird, vorzugsweise auf 4,5 bis 5,5.

7. Verfahren nach einem der Ansprüche 1 bis 6,
**dadurch gekennzeichnet,**
**dass** nach der Ablagerung der äußeren Schicht die Temperatur der Dispersion gesenkt wird.

8. Verfahren nach einem der Ansprüche 1 bis 7,
**dadurch gekennzeichnet,**
**dass** nach der Ablagerung der äußeren Schicht, vorzugsweise nach der genannten Temperatursenkung, vorzugsweise ferner nach einer Sedimentation der Partikel und Dekantieren des Überstands, eine Trocknung mindestens der äußeren Schicht vorgenommen wird.

9. Verfahren nach Anspruch 8,
**dadurch gekennzeichnet,**
**dass** die Trocknung durch Suspendieren der Partikel in einer Wasser anziehendesn Flüssigkeit, vorzugsweise Ethanol, vorgenommen wird.

10. Verfahren nach Anspruch 8 oder 9,
**dadurch gekennzeichnet,**
**dass** die Partikel nach der Trocknung filtriert und im wesentlichen vollständig getrocknet werden.

11. Verfahren nach einem der Ansprüche 1 bis 10,
**dadurch gekennzeichnet,**
**dass** die innere Schicht durch Gelatine A, Gelatine B, Casein oder ein Alginat oder durch ein Derivat oder Salz eines dieser Polymere gebildet wird.

12. Verfahren nach einem der Ansprüche 1 bis 11,
**dadurch gekennzeichnet,**
**dass** die äußere Schicht durch Gelatine B, Gummi arabicum, Pektin oder Chitosan oder durch ein Derivat oder Salz eines dieser Polymere gebildet wird.

13. Verfahren nach einem der Ansprüche 1 bis 12,
**dadurch gekennzeichnet,**
**dass** als die innere und die äußere Schicht Gelatine A/Gummi arabicum, Gelatine B/Gummi arabicum, Casein/Gummi arabicum, Gelatine A/Pektin, Gelatine A/Gelatine B oder Alkalimetall-Alginat/Chitosan kombiniert werden oder Derivate oder Salze dieser Polymere.

## Claims

1. Process for producing a microencapsulated unsaturated fatty acid or fatty acid compound, in particular an omega-3 fatty acid or omega-6 fatty acid or an ethyl ester or glyceride thereof, or a microencapsulated mixture of fatty acids and/or fatty acid compounds, in particular the aforementioned fatty acids and/or fatty acid,compounds, in which a bilayer capsule wall is produced, **characterized in that** the fatty acid or fatty acid compound or mixture is dispersed in water, and two layers, each formed by a polymer, are deposited successively on the particles of the dispersion from colloidal solution of the polymer in the water, with deposition of the inner layer being followed by addition of a colloidal solution of the polymer forming the outer layer, and bringing about deposition of the polymer on the inner layer.

2. Process according to Claim 1, **characterized in that** the fatty acid or fatty acid compound or mixture is dispersed in a previously prepared aqueous colloidal solution of the polymer forming the inner layer.

3. Process according to Claim 1 or 2, **characterized in that** the polymer forming the inner layer acts as protective colloid.

4. Process according to any of Claims 1 to 3, **characterized in that** the deposition on the particles is brought about by interfacial forces for the inner layer and/or by electrostatic forces for the outer layer.

5. Process according to any of Claims 1 to 4, **characterized in that** deposition of the polymer forming the outer layer is brought about by changing the charge of the polymer forming the inner layer and/or the charge of the polymer forming the outer layer, by changing the pH of the dispersion, to produce a difference between the charges of the two polymers.

6. Process according to Claim 5, **characterized in that** the pH is reduced to produce a positive charge of the polymer forming the inner layer, preferably to 4.5 to 5.5.

7. Process according to any of Claims 1 to 6, **characterized in that** the temperature of the dispersion is reduced after deposition of the outer layer.

8. Process according to any of Claims 1 to 7, **characterized in that** after the deposition of the outer layer, preferably after the said reduction in temperature, preferably further after a sedimentation of the particles and decantation of the supernatant, a drying of at least the outer layer is carried out.

9. Process according to Claim 8, **characterized in that** the drying is carried out by suspending the particles in a water-attracting liquid, preferably ethanol.

10. Process according to Claim 8 or 9, **characterized in that** the particles are filtered after the drying and are substantially completely dried.

11. Process according to any of Claims 1 to 10, **characterized in that** the inner layer is formed by gelatin A, gelatin B, casein or an alginate or by a derivative or salt of one of these polymers.

12. Process according to any of Claims 1 to 11, **characterized in that** the outer layer is formed by gelatin B, gum arabic, pectin or chitosan or by a derivative or salt of one of these polymers.

13. Process according to any of Claims 1 to 12, **characterized in that** gelatin A/gum arabic, gelatin B/gum arabic, casein/gum arabic, gelatin A/pectin, gelatin A/gelatin B or alkali metal alginate/chitosan are combined as the inner and the outer layer, or derivatives or salts of these polymers.

## Revendications

1. Procédé de préparation d'un acide gras insaturé, microencapsulé ou d'un composé d'acide gras insaturé, microencapsulé, en particulier d'un acide gras oméga-3 ou d'un acide gras oméga-6 ou d'un ester éthylique ou d'un glycéride de ceux-ci, ou d'un mélange microencapsulé d'acides gras ou de composés d'acides gras, en particulier ceux mentionnés ci-dessus, dans lequel on produit une paroi de capsule à deux couches, **caractérisé en ce que** l'acide gras ou le composé d'acide gras ou le mélange est dispersé dans l'eau et deux couches à chaque fois formées d'un polymère sont déposées à partir d' une solution colloïdale du polymère dans l'eau, l'une après l'autre sur les particules de la dispersion, une solution colloïdale du polymère formant la couche externe étant ajoutée après le dépôt de la couche interne et le polymère étant amené à se déposer sur la couche interne.

2. Procédé selon la revendication 1, **caractérisé en ce que** l'acide gras ou le composé d'acide gras ou le mélange est dispersé dans une solution colloïdale aqueuse préparée au préalable du polymère formant la couche interne.

3. Procédé selon la revendication 1 ou 2, **caractérisé en ce que** le polymère formant la couche interne agit comme colloïde de protection.

4. Procédé selon l'une quelconque des revendications 1 à 3, **caractérisé en ce que** la couche interne est amenée à se déposer sur les particules par des forces tensioactives et/ou la couche externe est amenée à se déposer sur les particules par des forces électrostatiques.

5. Procédé selon l'une quelconque des revendications 1 à 4, **caractérisé en ce que** le polymère formant la couche externe est amené à se déposer **en ce que**, par la modification du pH de la dispersion, la charge du polymère formant la couche interne et/ou la charge du polymère formant la couche externe est modifiée, en créant une différence entre les charges des deux polymères.

6. Procédé selon la revendication 5, **caractérisé en ce que** le pH du polymère formant la couche interne est abaissé afin de créer une charge positive, de préférence à 4,5 jusqu'à 5,5.

7. Procédé selon l'une quelconque des revendications 1 à 6, **caractérisé en ce que** la température de la dispersion est abaissée après le dépôt de la couche externe.

8. Procédé selon l'une quelconque des revendications 1 à 7, **caractérisé en ce qu'**on réalise un séchage au moins de la couche externe après le dépôt de la couche externe, de préférence après la diminution mentionnée de la température, en outre de préférence après une sédimentation des particules et une décantation de la phase surnageante.

9. Procédé selon la revendication 8, **caractérisé en ce que** le séchage est réalisé par la mise en suspension des particules dans un liquide attirant l'eau, de préférence l'éthanol.

10. Procédé selon la revendication 8 ou 9, **caractérisé en ce que** les particules sont filtrées après le séchage et sont séchées de manière essentiellement complète.

11. Procédé selon l'une quelconque des revendications 1 à 10, **caractérisé en ce que** la couche interne est formée par la gélatine A, la gélatine B, la caséine ou un alginate ou par un dérivé ou un sel d'un de ces polymères.

12. Procédé selon l'une quelconque des revendications 1 à 11, **caractérisé en ce que** la couche externe est formée par la gélatine B, la gomme arabique, la pectine ou le chitosane ou par un dérivé ou un sel d'un de ces polymères.

13. Procédé selon l'une quelconque des revendications 1 à 12, **caractérisé en ce qu'**on combine comme couche interne et couche externe gélatine A/gomme arabique, gélatine B/gomme arabique, caséine/gomme arabique, gélatine A/pectine, gélatine A/gélatine B ou alginate de métal alcalin/chitosane ou des dérivés ou des sels de ces polymères.
